(19) Europäisches Patentamt European Patent Office Office européen des brevets

(11) **EP 4 438 396 A1**

(12) **EUROPEAN PATENT APPLICATION**
published in accordance with Art. 153(4) EPC

(43) Date of publication:
**02.10.2024 Bulletin 2024/40**

(21) Application number: **22923499.2**

(22) Date of filing: **08.12.2022**

(51) International Patent Classification (IPC):
**B60L 58/27** (2019.01)        **H01M 10/6571** (2014.01)

(52) Cooperative Patent Classification (CPC):
**B60L 58/27; H01M 10/6571;** Y02E 60/10

(86) International application number:
**PCT/CN2022/137555**

(87) International publication number:
**WO 2023/142709 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.01.2022  CN 202210112694**

(71) Applicant: **BYD Company Limited
Shenzhen, Guangdong 518118 (CN)**

(72) Inventors:
• **ZHANG, Ke
Shenzhen, Guangdong 518118 (CN)**

• **LI, Jiannian
Shenzhen, Guangdong 518118 (CN)**
• **WU, Rongfang
Shenzhen, Guangdong 518118 (CN)**
• **GUO, Zizhu
Shenzhen, Guangdong 518118 (CN)**
• **PAN, Yi
Shenzhen, Guangdong 518118 (CN)**

(74) Representative: **Dehns Germany Partnerschaft mbB
Theresienstraße 6-8
80333 München (DE)**

(54) **HEATING CIRCUIT OF POWER BATTERY, AND ELECTRIC VEHICLE**

(57)     An electric vehicle having a power battery is provided. The power battery includes a heating circuit and a first battery core group and a second battery core group connected in series. The heating circuit of the power battery includes an inverter, an alternating current motor, and a first controller. A neutral point of the alternating current motor is connected to a first connection point, and the first connection point is a connection point between the first battery core group and the second battery core group. The first controller is configured to input a driving signal to the inverter to control the inverter to alternately connect the first battery core group and the second battery core group to the alternating current motor, to cause the first battery core group and the second battery core group to alternately charge each other.

FIG. 1

## Description

## CROSS-REFERENCE TO RELATED APPLICATIONS

The present disclosure claims priority to Chinese Patent Application No. 202210112694.2, filed on January 29, 2022 and entitled "HEATING CIRCUIT OF POWER BATTERY AND ELECTRIC VEHICLE", which is incorporated herein by reference in its entirety.

## FIELD

The present disclosure relates to the vehicle technologies, and more specifically, to a heating circuit of a power battery and an electric vehicle.

## BACKGROUND

With the development of vehicle technologies, vehicles using power batteries as power sources have become increasingly popular. Characteristics of the power batteries are significantly affected by an ambient temperature. Particularly, in a low temperature environment, energy and power characteristics of lithium ion power batteries are severely attenuated. Therefore, the batteries need to be heated in the low temperature environment. How to improve heating performance of a heating method in which self-heating of a battery core is realized using an excitation current has become a critical issue.

## SUMMARY

Embodiments of the present disclosure provide a heating circuit of a power battery, to improve heating performance.

According to a first aspect of the present disclosure, a heating circuit of a power battery is provided. The power battery includes a first battery core group and a second battery core group connected in series. The heating circuit of the power battery includes an inverter, an alternating current motor, and a first controller. A neutral point of the alternating current motor is connected to a first connection point, and the first connection point is a connection point between the first battery core group and the second battery core group. The first controller is configured to input a driving signal to the inverter to control the inverter to alternately connect the first battery core group and the second battery core group to the alternating current motor, to cause the first battery core group and the second battery core group to alternately charge each other.

In an embodiment, a switch is connected in series between the neutral point of the alternating current motor and the first connection point. The heating circuit further includes a second controller, and the second controller is configured to control an on-off state of the switch.

In an embodiment, a protection circuit is connected in series between the neutral point of the alternating current motor and the first connection point.

In an embodiment, a battery capacity of the first battery core group is the same as a battery capacity of the second battery core group.

In an embodiment, the first controller is further configured to adjust the driving signal, to cause a current intensity average value of the first battery core group to be in a range from 1C to 5C and a current intensity average value of the second battery core group to be in a range from 1C to 5C within a first time period, and the first time period is 60s.

In an embodiment, the first controller is further configured to adjust the driving signal, to cause a quantity of times that a real-time current of the first battery core group is switched from a positive cycle to a negative cycle to be in a range from 1 to 1000 times and a quantity of times that a real-time current of the second battery core group is switched from a positive cycle to a negative cycle to be in a range from 1 to 1000 times within 1s.

In an embodiment, the first controller is further configured to adjust the driving signal, to cause a quantity of times that a real-time current of the first battery core group is switched from a positive cycle to a negative cycle to be in a range from 1 to 100 times and a quantity of times that a real-time current of the second battery core group is switched from a positive cycle to a negative cycle to be in a range from 1 to 100 times within 1s.

In an embodiment, the first controller is further configured to adjust the driving signal, to cause a quantity of times that a real-time current of the first battery core group is switched from a positive cycle to a negative cycle to be 10 times and a quantity of times that a real-time current of the second battery core group is switched from a positive cycle to a negative cycle to be 10 times within 1s.

In an embodiment, the first controller is further configured to adjust the driving signal, to cause a magnitude of a real-time current of the first battery core group to be the same as a magnitude of a real-time current of the second battery core group.

In an embodiment, the first controller is further configured to adjust the driving signal, to cause a target ratio to be greater than or equal to 0.3. The target ratio is a ratio of a first value to a second value, the first value is a smaller one of a real-time current absolute value of the first battery core group and a real-time current absolute value of the second battery core group, and the second value is a larger one of the real-time current absolute value of the first battery core group and the real-time current absolute value of the second battery core group.

In an embodiment, when being configured to adjust the driving signal, the first controller is configured to adjust a duty cycle and/or a frequency of the driving signal.

According to a second aspect of the present disclosure, an electric vehicle is provided. The electric vehicle includes a power battery and the heating circuit according to any one in the first aspect.

According to the heating circuit of the power battery and the electric vehicle provided in the embodiments of the present disclosure, a circuit is added based on an original circuit topology structure of the electric vehicle. The circuit is from the neutral point of the alternating current motor to the connection point between the first battery core group and the second battery core group, and heating performance can be improved as a whole by using the heating circuit.

Through detailed description of exemplary embodiments of this specification with reference to the accompanying drawings, features, and advantages of the embodiments of this specification will become clear.

## BRIEF DESCRIPTION OF THE DRAWINGS

The accompanying drawings, which are incorporated into this specification and constitute a part of this specification, illustrate embodiments of this specification and, together with this specification, serve to explain the principles of the embodiments of this specification.

FIG. 1 is a block diagram of a heating circuit of a power battery according to an embodiment of the present disclosure;

FIG. 2 is a specific circuit diagram of a heating circuit of a power battery according to an embodiment of the present disclosure;

FIG. 3 is a schematic diagram of impact of a magnitude of an excitation current on a power battery capacity;

FIG. 4 is a schematic diagram of impact of a frequency of an excitation current on a temperature rise rate; and

FIG. 5 to FIG. 8 are schematic diagrams of decomposition of an impedance spectroscopy of a power battery in different SOCs under the action of excitation currents of different frequencies.

## DETAILED DESCRIPTION

The following describes in detail various exemplary embodiments of this specification with reference to the accompanying drawings.

In fact, the following descriptions of at least one exemplary embodiment are merely illustrative, and in no way constitute any limitation on the embodiments of this specification and application or use of this specification.

It should be noted that: similar reference signs or letters in the accompanying drawings indicate similar items. Therefore, once an item is defined in one accompanying drawing, the item does not need to be further discussed in the subsequent accompanying drawings.

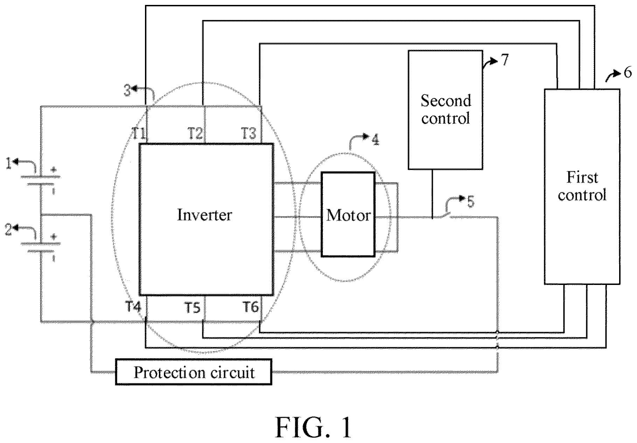

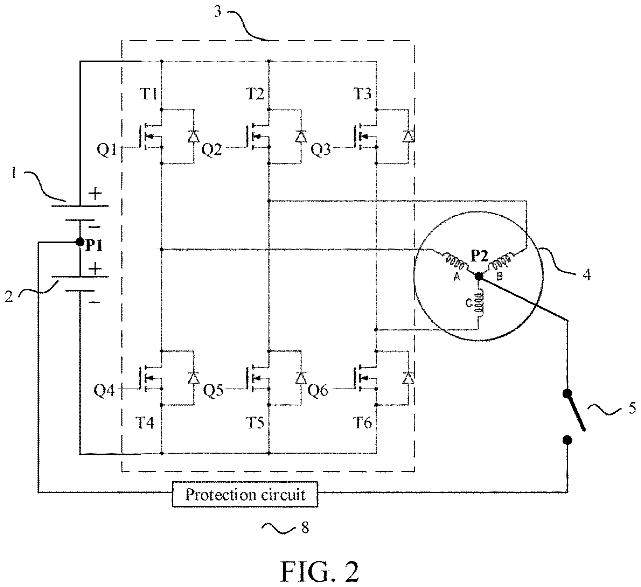

In an electric vehicle, an inverter is connected between a power battery and an alternating current motor. One of main functions of the inverter is to convert a direct current outputted by the power battery into an alternating current to drive the alternating current motor to rotate, so as to drive a wheel end to rotate. A power battery heating solution in the embodiments of the present disclosure utilizes a circuit topology structure between the power battery, the inverter, and the alternating current motor. The following describes, with reference to FIG. 1 and FIG. 2, a heating circuit of a power battery provided in the embodiments of the present disclosure.

The power battery includes a first battery core group 1 and a second battery core group 2 connected in series. The heating circuit includes an inverter 3, an alternating current motor 4, and a first controller 6.

The alternating current motor 4 is star-connected. Three tail ends of three phase coils (a coil A, a coil B, and a coil C) are connected together as a common end. The common end is a neutral point P2. The neutral point P2 of the alternating current motor 4 is connected to a first connection point P1. The first connection point P1 is a connection point between the first battery core group 1 and the second battery core group 2. In an example, a battery pack includes the first battery core group and the second battery core group. The battery pack provides a main positive port, a main negative port, and a third port lead out of the first connection point P1 to the outside. The first connection point P1 is connected to the neutral point P2 of the alternating current motor 4 through the third port. In another example, the first battery core group 1 and the second battery core group 2 are different battery packs.

The first controller is configured to input a driving signal to the inverter 3 to control the inverter 3 to alternately conduct the first battery core group 1 and the second battery core group 2 to the alternating current motor 4, to cause the first battery core group and the second battery core group to alternately charge each other.

In an example, referring to FIG. 1 and FIG. 2, the inverter 3 includes an insulated gate bipolar transistor (IGBT) transistor T1, an IGBT transistor T2, an IGBT transistor T3, an IGBT transistor T4, an IGBT transistor T5, and an IGBT transistor T6. The IGBT transistors T1 to T6 constitute three bridge arms. An IGBT is a composite voltage-driven power semiconductor device including a bipolar junction transistor (BJT) and a Metal-Oxide-Semiconductor Field Effect Transistor(MOSFET), and has advantages of a high input impedance of a metal-oxide-semiconductor field-effect transistor (MOSFET) and a low conduction voltage drop of a giant transistor (GTR). Referring to FIG. 2, in the inverter 3, each IGBT transistor is further connected in anti-parallel with a diode. The diode can protect the circuit. In another embodiment, the IGBT transistors T1 to T6 may be respectively replaced with MOS transistors.

In an embodiment of the present disclosure, the IGBT transistor may output current signals of different frequencies and amplitudes in real time according to a frequency and a cycle of the driving signal. In an example, the driving signal outputted by the first controller is a pulse width modulation (PWM) driving signal, that is, a pulse wave signal with a variable duty cycle.

In an embodiment of the present disclosure, referring to FIG. 2, the first controller outputs six driving signals Q1 to Q6. The driving signal Q1 is applied to the IGBT transistor T1, the driving signal Q2 is applied to the IGBT transistor T2, the driving signal Q3 is applied to the IGBT transistor T3, the driving signal Q4 is applied to the IGBT transistor T4, the driving signal Q5 is applied to the IGBT transistor T5, and the driving signal Q6 is applied to the IGBT transistor T6. The first controller alternately closes circuits from the first battery core group 1 and the second battery core group 2 to the alternating current motor 4 by applying the driving signals Q1 to Q6 to the IGBT transistors T1 to T6, to cause the first battery core group 1 and the second battery core group 2 to alternately charge each other. In an example, the first battery core group 1 discharges, the inverter 3 converts a direct current outputted by the first battery core group 1 into an alternating current and inputs the alternating current to the alternating current motor 4, and the alternating current motor 4 stores electric energy in a coil to charge the second battery core group 2. Then, the second battery core group 2 discharges, the inverter 3 converts a direct current outputted by the second battery core group 2 into an alternating current and inputs the alternating current to the alternating current motor 4, and the alternating current motor 4 stores the electric energy in the coil to charge the first battery core group 1. Through cyclical repetition of this process, the first battery core group and the second battery core group alternately charge each other.

In an example, a switch 5 is connected in series between the neutral point P2 of the alternating current motor and the first connection point P1. The heating circuit further includes a second controller 7. The second controller is configured to control an on-off state of the switch 5, so that the switch 5 is turned on when the power battery needs to be heated and is turned off when the power battery does not need to be heated, to ensure safety of a vehicle and the power battery. For example, the second controller controls the switch 5 to be turned off in a traveling state of an electric vehicle, to ensure safety of traveling of the vehicle.

In an example, a protection circuit 8, for example, a fuse, is connected in series between the neutral point P2 of the alternating current motor and the first connection point P1, to improve safety of the battery heating process.

In an example, a battery capacity of the first battery core group is the same as a battery capacity of the second battery core group. The arrangement of the first battery core group and the second battery core group having the same battery capacity facilitates simplification of a control logic algorithm and selection of related components of the heating circuit.

According to the heating circuit of the power battery provided in the embodiments of the present disclosure, a circuit is added based on an original circuit topology structure of the electric vehicle. The circuit is from the neutral point of the alternating current motor to the connection point between the first battery core group and the second battery core group. A change to an original circuit is small, and the solution is simple and easy to implement.

During heating of the power battery, a frequency and a magnitude of a charge/discharge current, that is, an excitation current, are limited by the related components. The heating circuit provided in the embodiments of the present disclosure enables a degree of limitation on the excitation current to be relatively small, making it possible to heat a battery with a relatively large excitation current. For example, if a limitation of a single coil of a motor on the excitation current is considered, assuming that an allowed maximum current value passing the single coil of the motor is 100 units, according to the heating circuit provided in the embodiments of the present disclosure, three coils simultaneously store energy and discharge, so that an upper limit of the excitation current may be 300 units.

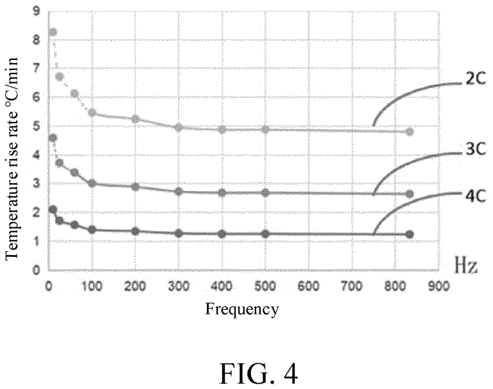

During heating of the power battery, control of the excitation current is extremely critical. Under the action of the relatively large excitation current, a temperature rise rate of the power battery is relatively fast. FIG. 4 shows a capacity retention rate of lithium iron phosphate with a ternary battery under a self-heating condition. The inventor finds through a large quantity of experiments that, at a temperature of -20°C, the power battery is heated by using an excitation current of 1C, and a capacity retention rate is 99.0% to 99.94% after the power battery is heated for a preset quantity of times. In other words, a battery capacity is only 99.0% to 99.94% of an original battery capacity after the power battery is heated for the preset quantity of times. 1C is a current intensity when the battery fully discharges for one hour. The preset quantity of times is 200. For a case in which the power battery is heated by using a charge/discharge current of 2C to 5C, reference may also be made to FIG. 4. In other words, as the excitation current increases, adverse impact on the battery capacity also increases.

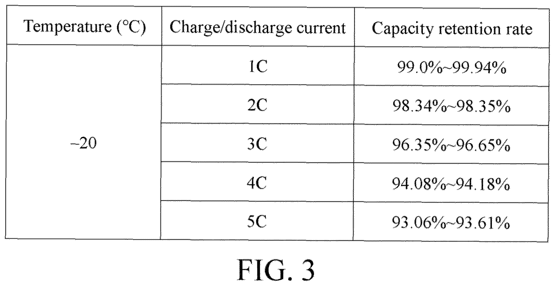

The inventor finds through a large quantity of experiments that, an excessively high frequency of the excitation current affects heating efficiency, causing a temperature of the battery to rise slowly. This is due to inherent electrochemical characteristics of the battery. An impedance of the battery is larger under a low frequency current oscillation, and therefore a temperature rise effect is higher. However, during heating in a low temperature environment, low frequency excitation may lead to reduction of battery life and may even cause lithium precipitation. Referring to FIG. 3, the power battery is heated by using an excitation current of 2C, an excitation current of 3C, and an excitation current of 4C separately, and a frequency of the excitation current is set to vary from 1 Hz to 1000 Hz. It can be learned that a temperature rise rate is relatively high in a low frequency stage, and especially in an interval of 1 Hz to 100 Hz, the temperature rise rate of the battery is relatively high.

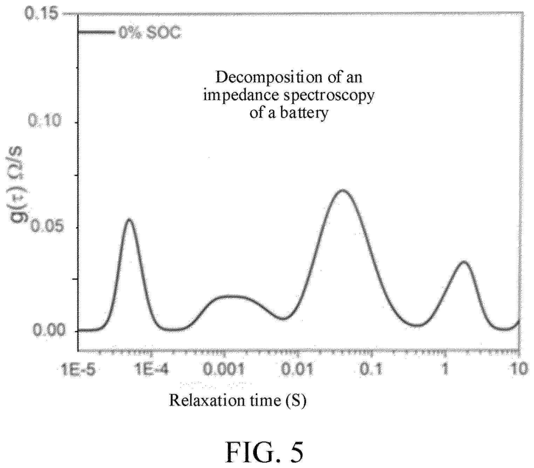

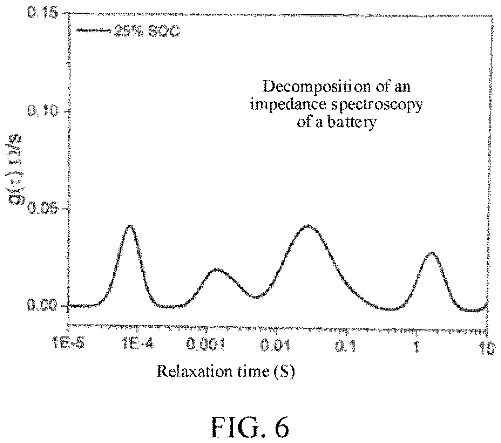

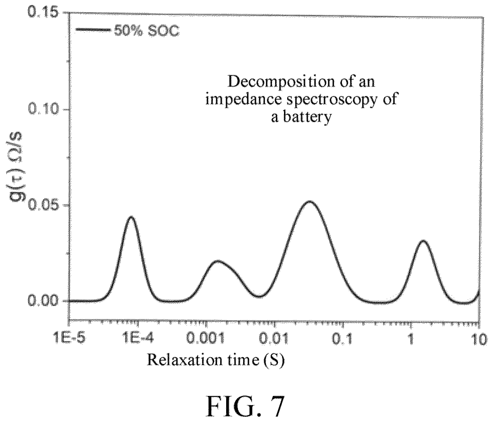

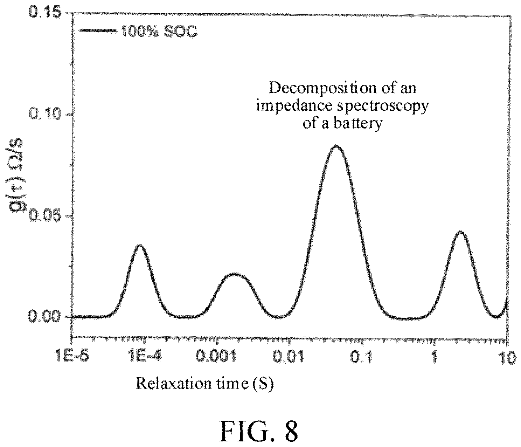

FIG. 5 to FIG. 8 are schematic diagrams of decomposition of a battery impedance spectroscopy of a power battery in different SOCs under the action of excitation currents of different frequencies. A state of charge (SOC) is the remaining charge in the battery and is usually expressed as a percentage, that is, a percentage of the remaining quantity of electricity of the battery to a total capacity. A horizontal axis is a periodicity length of an excitation current in units of seconds, a reciprocal thereof is a frequency of the excitation current, and the frequency gradually decreases from left to right in a direction of the horizontal axis. A vertical axis is distribution of an impedance over time in units of ohms per second. It can be learned from FIG. 5 to FIG. 8 that, in different SOCs, when a periodicity of the excitation current is in an interval of 0.01s to 0.1s (a frequency is in a range from 10 Hz to 100 Hz), there is an extremely large peak in the distribution of the impedance over time. It can be learned from FIG. 5 to FIG. 8 that, in different SOCs, when the periodicity of the excitation current exceeds 1s (the frequency is less than 1 Hz), a relatively high lithium precipitation risk occurs.

In an embodiment of the present disclosure, the first controller obtains a battery status (a temperature, a quantity of electricity, a voltage) and a magnitude and a frequency of a charge/discharge current that are monitored by a vehicle measurement system, and dynamically adjusts the frequency or the current magnitude of the excitation current in real time according to a preset policy. The following describes a manner of controlling the excitation current, that is, the charge/discharge current, in this embodiment.

In an embodiment of the present disclosure, a real-time current of the first battery core group 1 is denoted as $I_A$, and a real-time current of the second battery core group 2 is denoted as $I_B$. That $I_A$ flows out of a positive electrode of the first battery core group 1 is denoted as a positive cycle, and that $I_A$ flows into the positive electrode of the first battery core group 1 is denoted as a negative cycle. That $I_B$ flows out of a positive electrode of the second battery core group 2 is denoted as a positive cycle, and that $I_B$ flows into the positive electrode of the second battery core group 2 is denoted as a negative cycle.

Policy 1: The first controller is further configured to adjust the driving signal, to cause a current intensity average value of the first battery core group to be in a range from 1C to 5C and a current intensity average value of the second battery core group to be in a range from 1C to 5C within a first time period, and the first time period is 60s. In other words, during heating of the power battery, within a time length of at least 60s, the current intensity average value of the first battery core group is in the range from 1C to 5C, and the current intensity average value of the second battery core group is in the range from 1C to 5C.

A current intensity average value of a battery core group may be calculated through the following formula:

$$I_{eff} = \frac{\int_0^t i\,dt}{t}$$

. i is a magnitude of a real-time current of the battery core group (without considering a direction), that is, i is a positive value, t is time, and $I_{eff}$ is the current intensity average value.

Herein, "C" is a rate of a magnitude of the charge/discharge current of the battery, and 1C represents a current intensity when the battery fully discharges for one hour. For the first battery core group, 1C=CA/3600s, and CA is a rated capacity of the first battery core group in units of ampere hours. For the second battery core group, 1C=CB/3600s, and CB is a rated capacity of the second battery core group in units of ampere hours. In other words,

$$1*(CA/3600s) \leq I_{effA} \leq 5*(CA/3600s)$$

$$1*(CB/3600s) \leq I_{effB} \leq 5*(CB/3600s)$$

$I_{effA}$ is the current intensity average value of the first battery core group 1 within the first time period, and $I_{effB}$ is the current intensity average value of the second battery core group 2 within the first time period.

In the embodiments of the present disclosure, the excitation current is controlled to be in a range from 1C to 5C, so that heating efficiency can be ensured, and the adverse impact on the battery capacity is controlled within a relatively small range. In addition, over-charge or over-discharge occurring on a battery core in the low temperature environment can be further avoided, thereby ensuring safety of the battery core.

Policy 2:

In an example, the first controller is further configured to adjust the driving signal, to cause a quantity of times that a real-time current of the first battery core group is switched from a positive cycle to a negative cycle to be in a range from 1 to 1000 times and a quantity of times that a real-time current of the second battery core group is switched from a positive cycle to a negative cycle to be in a range from 1 to 1000 times within 1s. In other words, during heating of the power battery, a quantity of times that a real-time current of a battery core group is switched from the positive cycle to the negative cycle is in the range from 1 to 1000 times within a time length of at least 1s.

In an example, the first controller is further configured to adjust the driving signal, to cause a quantity of times that a real-time current of the first battery core group is switched from a positive cycle to a negative cycle to be in a range from 5 to 1000 times and a quantity of times that a real-time current of the second battery core group is switched from a positive cycle to a negative cycle to be in a range from 5 to 1000 times within 1s. In other words, during heating of the power battery, a quantity of times that a real-time current of a battery core group is switched from the positive cycle to the negative cycle is in the range from 5 to 1000 times within a time length of at least 1s.

In an example, the first controller is further configured to adjust the driving signal, to cause a quantity of times that a real-time current of the first battery core group is switched from a positive cycle to a negative cycle to be in a range from 1 to 100 times and a quantity of times that a real-time current of the second battery core group is switched from a positive cycle to a negative cycle to be in a range from 1 to 100 times within 1s. In other words, during heating of the power battery, a quantity of times that a real-time current of a battery core group is switched from the positive cycle to the negative cycle is in the range from 1 to 100 times within a time length of at least 1s.

In an example, the first controller is further configured to adjust the driving signal, to cause a quantity of times that a real-time current of the first battery core group is switched from a positive cycle to a negative cycle to be in a range from 5 to 100 times and a quantity of times that a real-time current of the second battery core group is switched from a positive cycle to a negative cycle to be in a range from 5 to 100 times within 1s. In other words, during heating of the power battery, a quantity of times that a real-time current of a battery core group is switched from the positive cycle to the negative cycle is in the range from 5 to 100 times within a time length of at least 1s.

In an example, the first controller is further configured to adjust the driving signal, to cause a quantity of times that a real-time current of the first battery core group is switched from a positive cycle to a negative cycle to be 10 times and a quantity of times that a real-time current of the second battery core group is switched from a positive cycle to a negative cycle to be 10 times within 1s. In other words, during heating of the power battery, a quantity of times that a real-time current of a battery core group is switched from the positive cycle to the negative cycle is 10 times within a time length of at least 1s.

With reference to the content shown in FIG. 4 and FIG. 5 to FIG. 8, considering the adverse impact on the battery life and the lithium precipitation risk occurring on the excitation current in an excessively low frequency, in the embodiments of the present disclosure, a range of a safety frequency of the excitation current is set to 1 Hz or more, that is, a lower limit of the frequency of the excitation current is 1 Hz. Considering the heating efficiency, an upper limit of the frequency of the excitation current is set to 1000 Hz. In the embodiments of the present disclosure, several ranges are preferably selected from a range from 1 Hz to 1000 Hz. The quantity of times that the real-time current of the battery core group is switched from the positive cycle to the negative cycle within unit time is set in the foregoing manner, so that the heating efficiency can be taken into account, impact of heating on the battery life can be reduced, and a risk in a heating process can be reduced.

Policy 3: The first controller is further configured to adjust the driving signal, to cause a magnitude of a real-time current of the first battery core group to be the same as a magnitude of a real-time current of the second battery core group. That is, in a heating process, within at least a period of time, $|I_A|=|I_B|$. "| |" is a symbol of an absolute value.

The magnitude of the real-time current of the first battery core group is the same as the magnitude of the real-time current of the second battery core group, which facilitates simplification of a control logic algorithm and selection of related components of the heating circuit and can reduce costs.

Policy 4:

The first controller is further configured to adjust the driving signal, to cause a target ratio to be greater than or equal to 0.3. The target ratio is a ratio of a first value to a second value, the first value is a smaller one of a real-time current absolute value of the first battery core group and a real-time current absolute value of the second battery core group, and the second value is a larger one of the real-time current absolute value of the first battery core group and the real-time current absolute value of the second battery core group.

It can be learned from the policy 4 that, the magnitude of the real-time current of the first battery core group and the magnitude of the real-time current of the second battery core group may be different based on the heating circuit provided in the embodiments of the present disclosure. The ratio of the smaller one of the real-time current absolute value of the first battery core group and the real-time current absolute value of the second battery core group to the larger one of the real-time current absolute value of the first battery core group and the real-time current absolute value of the second battery core group is controlled to be 0.3 or more, so that the magnitude of the real-time current of the first battery core group and the magnitude of the real-time current of the second battery core group do not differ excessively. In this way, heating of the power battery can also be relatively well implemented, and is relatively easy to implement technically.

In the embodiments of the present disclosure, the foregoing policies may be implemented in superposition without conflict, to achieve a better effect.

In an embodiment of the present disclosure, the first controller may adjust a duty cycle and/or a frequency of the driving signal, to implement the foregoing control policies. For example, the first controller adjusts the duty cycle of the driving signal, to adjust the magnitude of the excitation current. For example, the first controller adjusts the frequency of the driving signal, to control a quantity of times that the excitation current is switched from the positive cycle to the negative cycle within a period of time.

In the embodiments of the present disclosure, through the foregoing policies, temperature rise efficiency and safety in a self-heating process are taken into account, the power battery can be heated efficiently without causing an excessively large damage to the battery life, and safety of the battery is ensured.

A first controller in an embodiment of the present disclosure may include a processor, a memory, and programs or instructions stored in the memory and runnable on the processor, where the programs or the instructions are executed by the processor to implement the heating control policy according to any one of the foregoing embodiments.

An embodiment of the present disclosure provides a vehicle, including a power battery and the heating circuit of the power battery according to any one of the foregoing embodiments.

The embodiments of the present disclosure are all described in a progressive manner. For same or similar parts in the embodiments, reference may be made to these embodiments. Each embodiment focuses on a difference from other embodiments. For the electric vehicle embodiments, reference may be made to partial description in the method embodiments.

Specific embodiments of this specification are described above. Other embodiments fall within the scope of the appended claims. In some cases, the actions or steps recorded in the claims may be performed in sequences different from those in the embodiments and an expected result may still be achieved. In addition, the processes depicted in the accompanying drawings are not necessarily performed in the specific order or successively to achieve an expected result. In some implementations, multitasking and parallel processing may be feasible or beneficial.

The embodiments of this specification may be a system, a method, and/or a computer program product. The computer program product may include a computer-readable storage medium, having computer instructions used for causing the processor to implement the aspects of the embodiments of this specification stored therein.

The computer-readable storage medium may be a physical device that can retain and store computer instructions used by a computer instruction-executing device. The computer-readable storage medium may be, for example, but is not limited to, an electrical storage device, a magnetic storage device, an optical storage device, an electromagnetic storage device, a semiconductor storage device, or any appropriate combination of the above. In a more specific example (a non-exhaustive list), the computer-readable storage medium includes a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical coding device such as a punched card or protrusion in a groove in which computer instructions are stored, and any appropriate combination of the above. The computer-readable storage medium as used here is not explained as a transient signal itself, such as a radio wave or other electromagnetic waves propagated freely, an electromagnetic wave propagated through a waveguide or other transmission media (e.g., a light pulse propagated through an optical fiber cable), or an electrical signal transmitted over a wire.

The computer instructions described herein may be downloaded to various computing/processing devices from the computer-readable storage medium or may be downloaded to an external computer or an external storage device through a network such as an Internet, a local area network, a wide area network, and/or a wireless network. The network may include copper transmission cables, optical fiber transmission fibers, wireless transmission, routers, firewalls, switches, gateway computers, and/or edge servers. A network adapter card or network interface in each computing/processing device receives computer instructions from the network and forwards the computer instructions for storage in a computer-readable storage medium in each computing/processing device.

The flowcharts and block diagrams in the accompanying drawings illustrate architectures, functions, and operations that may be implemented for systems, methods and computer program products according to a plurality of embodiments of this specification. In this regard, each box in a flowchart or a block diagram may represent a module, a program segment or a part of computer instruction. The module, the program segment or the part of computer instruction includes one or more executable computer instructions used for implementing specified logic functions. In some implementations used as substitutes, functions annotated in boxes may alternatively occur in a sequence different from that annotated in an accompanying drawing. For example, actually two continuous boxes shown in succession may be performed basically in parallel, and sometimes the two boxes may be performed in a reverse sequence. This is determined by a related function. Each box in a block diagram and/or a flowchart and a combination of boxes in the block diagram and/or the flowchart may be implemented by using a dedicated hardware-based system configured to perform a specified function or action, or may be implemented by using a combination of dedicated hardware and a computer instruction. It is well known to a person skilled in the art that an implementation in hardware, an implementation in software, and an implementation in a combination of software and hardware are equivalent.

The embodiments of this specification are described above, and the foregoing descriptions are exemplary but not exhaustive and are not limited to the disclosed embodiments. Without departing from the scope of the described embodiments, many modifications and variations are apparent to a person of ordinary skill in the technical field. The selected terms used herein is intended to best explain the principles of the embodiments, practical applications, or improvements of technologies in the market, or to enable other persons of ordinary skill in the technical field to understand the embodiments disclosed herein.

**Claims**

1. A heating circuit of a power battery, wherein the power battery comprises a first battery core group (1) and a second battery core group (2) connected in series, the heating circuit comprising an inverter (3), an alternating current motor (4), and a first controller (6);

   a neutral point (P2) of the alternating current motor (4) being connected to a first connection point (P1), the first connection point (P1) being a connection point between the first battery core group (1) and the second battery core group (2); and
   the first controller (6) being configured to input a driving signal to the inverter (3) to control the inverter (3) to alternately connect the first battery core group (1) and the second battery core group (2) to the alternating current motor (4), to cause the first battery core group (1) and the second battery core group (2) to alternately charge each other.

2. The heating circuit according to claim 1, wherein a switch (5) is connected in series between the neutral point (P2) of the alternating current motor (4) and the first connection point (P1), the heating circuit further comprising a second controller, the second controller being configured to control an on-off state of the switch.

3. The heating circuit according to claim 1 or 2, wherein a protection circuit (8) is connected in series between the neutral point (P2) of the alternating current motor (4) and the first connection point (P1).

4. The heating circuit according to any one of claims 1 to 3, wherein a battery capacity of the first battery core group (1) is the same as a battery capacity of the second battery core group (2).

5. The heating circuit according to any one of claims 1 to 4, wherein the first controller (6) is further configured to adjust the driving signal, to cause a current intensity average value of the first battery core group (1) to be in a range from 1C to 5C and a current intensity average value of the second battery core group (2) to be in a range from 1C to 5C within a first time period, and the first time period is 60s.

6. The heating circuit according to any one of claims 1 to 5, wherein the first controller (6) is further configured to adjust the driving signal, to cause a quantity of times that a real-time current of the first battery core group (1) is switched from a positive cycle to a negative cycle to be in a range from 1 to 1000 times and a quantity of times that a real-time current of the second battery core group (2) is switched from a positive cycle to a negative cycle to be in a range from 1 to 1000 times within 1s.

7. The heating circuit according to any one of claims 1 to 5, wherein the first controller (6) is further configured to adjust the driving signal, to cause a quantity of times that a real-time current of the first battery core group (1) is switched from a positive cycle to a negative cycle to be in a range from 1 to 100 times and a quantity of times that a real-time current of the second battery core group (2) is switched from a positive cycle to a negative cycle to be in a range from 1 to 100 times within 1s.

8. The heating circuit according to any one of claims 1 to 5, wherein the first controller (6) is further configured to adjust the driving signal, to cause a quantity of times that a real-time current of the first battery core group (1) is switched from a positive cycle to a negative cycle to be 10 times and a quantity of times that a real-time current of the second battery core group (2) is switched from a positive cycle to a negative cycle to be 10 times within 1s.

9. The heating circuit according to any one of claims 1 to 5, wherein the first controller (6) is further configured to adjust the driving signal, to cause a magnitude of a real-time current of the first battery core group (1) to be the same as a magnitude of a real-time current of the second battery core group (2).

10. The heating circuit according to any one of claims 1 to 5, wherein the first controller (6) is further configured to adjust the driving signal, to cause a target ratio to be greater than or equal to 0.3, the target ratio being a ratio of a first value to a second value, the first value being a smaller one of a real-time current absolute value of the first battery core group (1) and a real-time current absolute value of the second battery core group (2), and the second value being a larger one of the real-time current absolute value of the first battery core group (1) and the real-time current absolute value of the second battery core group (2).

11. The heating circuit according to any one of claims 5 to 10, wherein when being configured to adjust the driving signal, the first controller (6) is configured to adjust a duty cycle and/or a frequency of the driving signal.

12. An electric vehicle, comprising a power battery and a heating circuit,

the power battery comprising a first battery core group (1) and a second battery core group (2) connected in series, and the heating circuit comprising an inverter (3), an alternating current motor (4), and a first controller (6);
a neutral point (P2) of the alternating current motor (4) being connected to a first connection point (P1), the first connection point (P1) being a connection point between the first battery core group (1) and the second battery core group (2); and
the first controller (6) being configured to input a driving signal to the inverter (3) to control the inverter to alternately connect the first battery core group (1) and the second battery core group (2) to the alternating current motor (4), to cause the first battery core group (1) and the second battery core group (2) to alternately charge each other.

13. The electric vehicle according to claim 12, wherein a switch (5) is connected in series between the neutral point (P2) of the alternating current motor (4) and the first connection point (P1), the heating circuit further comprises a second controller, and the second controller is configured to control an on-off state of the switch.

14. The electric vehicle according to claim 12 or 13, wherein a protection circuit (8) is connected in series between the neutral point (P2) of the alternating current motor (4) and the first connection point (P1).

15. The electric vehicle according to any one of claims 12 to 14, wherein the first controller (6) is further configured to adjust the driving signal, to cause a current intensity average value of the first battery core group (1) to be in a range from 1C to 5C and a current intensity average value of the second battery core group (2) to be in a range from 1C to 5C within a first time period, and the first time period is 60s.

16. The electric vehicle according to any one of claims 12 to 14, wherein the first controller (6) is further configured to adjust the driving signal, to cause a quantity of times that a real-time current of the first battery core group (1) is switched from a positive cycle to a negative cycle to be in a range from 1 to 1000 times and a quantity of times that a real-time current of the second battery core group (2) is switched from a positive cycle to a negative cycle to be in a range from 1 to 1000 times within 1s.

17. The electric vehicle according to any one of claims 12 to 14, wherein the first controller (6) is further configured to adjust the driving signal, to cause a quantity of times that a real-time current of the first battery core group (1) is switched from a positive cycle to a negative cycle to be in a range from 1 to 100 times and a quantity of times that a real-time current of the second battery core group (2) is switched from a positive cycle to a negative cycle to be in a range from 1 to 100 times within 1s.

18. The electric vehicle according to any one of claims 12 to 14, wherein the first controller (6) is further configured to adjust the driving signal, to cause a quantity of times that a real-time current of the first battery core group (1) is switched from a positive cycle to a negative cycle to be 10 times and a quantity of times that a real-time current of the second battery core group (2) is switched from a positive cycle to a negative cycle to be 10 times within 1s.

19. The electric vehicle according to any one of claims 12 to 14, wherein the first controller (6) is further configured to adjust the driving signal, to cause a magnitude of a real-time current of the first battery core group (1) to be the same as a magnitude of a real-time current of the second battery core group (2).

20. The electric vehicle according to any one of claims 12 to 14, wherein the first controller (6) is further configured to adjust the driving signal, to cause a target ratio to be greater than or equal to 0.3, the target ratio being a ratio of a first value to a second value, the first value being a smaller one of a real-time current absolute value of the first battery core group (1) and a real-time current absolute value of the second battery core group (2), and the second value being a larger one of the real-time current absolute value of the first battery core group (1) and the real-time current absolute value of the second battery core group (2).

FIG. 1

FIG. 2

| Temperature (°C) | Charge/discharge current | Capacity retention rate |
|---|---|---|
| –20 | 1C | 99.0%~99.94% |
| | 2C | 98.34%~98.35% |
| | 3C | 96.35%~96.65% |
| | 4C | 94.08%~94.18% |
| | 5C | 93.06%~93.61% |

FIG. 3

FIG. 4

FIG. 5

FIG. 6

FIG. 7

FIG. 8

## INTERNATIONAL SEARCH REPORT

| International application No. |
|---|
| **PCT/CN2022/137555** |

**A.    CLASSIFICATION OF SUBJECT MATTER**

B60L58/27(2019.01)i;H01M10/6571(2014.01)i

According to International Patent Classification (IPC) or to both national classification and IPC

**B.    FIELDS SEARCHED**

Minimum documentation searched (classification system followed by classification symbols)

IPC: B60L H01M

Documentation searched other than minimum documentation to the extent that such documents are included in the fields searched

Electronic data base consulted during the international search (name of data base and, where practicable, search terms used)

CNPAT, WPI, EPODOC, CNKI: 比亚迪, 张柯, 李坚年, 吴荣方, 郭姿珠, 潘仪, 电池, 电芯, 加热, 低温, 升温, 逆变器, 电机, 电动机, 马达, 星型, 中性点, 连接, 电流, 频率, 周期, BYD, battery, heat, low, temperature, cold, rise, DC, AC, inverter, motor, star, neutral, link, connect, current, frequency, cycle, period

**C.    DOCUMENTS CONSIDERED TO BE RELEVANT**

| Category* | Citation of document, with indication, where appropriate, of the relevant passages | Relevant to claim No. |
|---|---|---|
| PX | CN 114566740 A (BYD CO., LTD.) 31 May 2022 (2022-05-31)<br>description, specific embodiments, and figures 1-2 | 1-20 |
| PX | CN 216980690 U (BYD CO., LTD.) 15 July 2022 (2022-07-15)<br>description, specific embodiments, and figures 1-5 | 1-20 |
| X | CN 113348616 A (SOKEN, INC. et al.) 03 September 2021 (2021-09-03)<br>description, paragraphs 14-67, and figures 1-14 | 1-20 |
| A | CN 109995102 A (CHINA FIRST AUTOMOBILE WORKS GROUP CO., LTD.) 09 July 2019 (2019-07-09)<br>entire document | 1-20 |
| A | CN 111355435 A (BYD CO., LTD.) 30 June 2020 (2020-06-30)<br>entire document | 1-20 |
| A | CN 112103595 A (SHANGHAI JIAO TONG UNIVERSITY) 18 December 2020 (2020-12-18)<br>entire document | 1-20 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 February 2023** | **24 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/137555**

**C.    DOCUMENTS CONSIDERED TO BE RELEVANT**

| Category* | Citation of document, with indication, where appropriate, of the relevant passages | Relevant to claim No. |
|---|---|---|
| A | JP 2013187919 A (NIPPON SOKEN INC. et al.) 19 September 2013 (2013-09-19)<br>entire document | 1-20 |

Form PCT/ISA/210 (second sheet) (July 2022)

**INTERNATIONAL SEARCH REPORT**
Information on patent family members

International application No.

**PCT/CN2022/137555**

| Patent document cited in search report | | | Publication date (day/month/year) | Patent family member(s) | | | Publication date (day/month/year) |
|---|---|---|---|---|---|---|---|
| CN | 114566740 | A | 31 May 2022 | None | | | |
| CN | 216980690 | U | 15 July 2022 | None | | | |
| CN | 113348616 | A | 03 September 2021 | US | 2021351684 | A1 | 11 November 2021 |
| | | | | DE | 112020000503 | T5 | 25 November 2021 |
| | | | | JP | 2020120566 | A | 06 August 2020 |
| | | | | WO | 2020153313 | A1 | 30 July 2020 |
| CN | 109995102 | A | 09 July 2019 | None | | | |
| CN | 111355435 | A | 30 June 2020 | None | | | |
| CN | 112103595 | A | 18 December 2020 | None | | | |
| JP | 2013187919 | A | 19 September 2013 | JP | 5865736 | B2 | 17 February 2016 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210112694